(19) Europäisches Patentamt
European Patent Office
Office européen des brevets

(11) Veröffentlichungsnummer: **0 515 913 A1**

# (12) EUROPÄISCHE PATENTANMELDUNG

(21) Anmeldenummer: **92108106.3**

(22) Anmeldetag: **13.05.92**

(51) Int. Cl.[5]: **B01J 20/18**, B01J 20/32

(30) Priorität: **27.05.91 DE 4117261**

(43) Veröffentlichungstag der Anmeldung: **02.12.92 Patentblatt 92/49**

(84) Benannte Vertragsstaaten: **AT BE CH DE DK ES FR GB GR IT LI LU MC NL PT SE**

(71) Anmelder: **H. SEUS GmbH & Co. SYSTEMTECHNIK KG**
**Banter Weg 13**
**W-2940 Wilhelmshaven(DE)**

(72) Erfinder: **Meyer, Jürgen**
**Anne-Frank-Strasse 8**
**W-2948 Schortens 1(DE)**

(74) Vertreter: **Eisenführ, Speiser & Partner**
**Martinistrasse 24**
**W-2800 Bremen 1(DE)**

## (54) Molekularsieb.

(57) Ein Molekularsieb zur Trennung von gasförmigen und/oder flüssigen Stoffen, insbesondere zur Reinigung von Lösungsmitteln enthaltender industrieller Abluft, weist einen oder mehrere gasförmige und/oder flüssige Stoffe adsorbierende, im allgemeinen partikelförmige Körper auf. Der oder die Körper sind im wesentlichen von einer Schicht einer Substanz umschlossen, die so ausgebildet ist, daß die Diffusionsgeschwindigkeit eines oder mehrerer bestimmter Stoffe aus einer Gruppe von adsorptionsfähigen Stoffen verlangsamt wird. Vorzugsweise besteht diese Substanz aus einem Siliconöl. Gemäß einem weiteren Aspekt der Erfindung weist das Molekularsieb eine Infrarot-Strahlen reflektierende Zusatzsubstanz auf, die vorzugsweise in der Substanz enthalten sein kann.

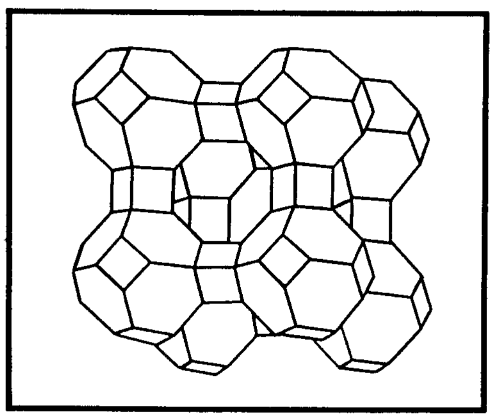

Fig. 1

EP 0 515 913 A1

Die Erfindung betrifft ein Molekularsieb zur Trennung von gasförmigen und/oder flüssigen Stoffen, insbesondere zur Reinigung von Lösungsmitteln enthaltender industrieller Abluft, mit einem oder mehreren gasförmige und/oder flüssige Stoffe adsorbierenden, im allgemeinen partikelförmigen Körpern.

Molekularsiebe besitzen eine bestimmte Kristallstruktur, die eine Vielzahl von Poren mit im wesentlichen einheitlichen Durchmessern enthält, die in der Größenordnung der Durchmesser vielgenutzter Lösungsmittel-Moleküle liegen. Aufgrund der Kristallstruktur haben die Molekularsiebe eine große innere Oberfläche die im Bereich von bis zu 1000 $m^2/g$ liegen kann. Die Sieb- und Adsorptionswirkung der Molekularsiebe beruht nun darauf, daß nur solche gasförmigen und/oder flüssigen Stoffe adsorbiert werden können, deren Mol. in ihre Poren eindringen können. Durch die große innere Oberfläche besitzten Molekularsiebe eine große Adsorptionswirkung. Insbesondere eignen sich Molekularsiebe zur Reinigung von Lösungsmitteln enthaltender industrieller Abluft, indem die Luft durch ein Molekularsieb-Bett, bestehend aus einer Vielzahl von Molekularsieb-Partikeln, geführt wird und dabei die Lösungsmittel adsorbiert werden, wodurch sie aus der Abluft herausgetrennt werden.

Die Adsorption erfolgt im allgemeinen bei niedrigen Temperaturen. Zur Regenerierung der Molekularsiebe wird die Desorption, d.h. die Austreibung, der adsorbierten Substanzen aus den Molekularsieben durch Erhitzen auf etwa bis zu 250 °C durchgeführt, um ein sinnbringende Rückgewinnung zu gewährleisten.

Typischerweise werden als Molekularsiebe Zeolithe eingesetzt, die völlig unbrennbar sind und aus kristallinen Aluminiumsilikaten bestehen, deren Kristallfeuchtigkeit bei der Herstellung ohne Schädigung des kristallinen Gitters durch Wärmeeinwirkung entfernt wird. Die Zeolithe können synthetisch hergestellt werden. Es gibt aber auch natürliche Zeolithe. In der Adsorptionstechnik werden hauptsächlich synthetisch hergestellte Zeolithe verwendet, die z.B. aus einer Mischung von Natriumaluminat und Wasserglas hergestellt sind. Durch eine unterschiedliche Zusammensetzung der Zeolith-Elementarzellen entstehen genau definierte Hohlräume. Auch die Zuführungsporen zu den Adsorptionshohlräumen haben einen genau definierten Durchmesser. Deshalb werden solche Stoffe adsorbiert, deren kleinster Moleküldurchmesser (sog. kritischer Moleküldurchmesser) kleiner als der Porendurchmesser des Zeoliths ist. Es ist daher eine selektive Trennung von Stoffen nach ihrem unterschiedlichen Moleküldurchmesser möglich.

Es gibt nun Anwendungsfälle, bei denen eine Adsorption von bestimmten Stoffen aus einer ganzen Gruppe von unterschiedlichen Stoffen mit unterschiedlichen Moleküldurchmessern erwünscht ist, jedoch andere Stoffe aus dieser Gruppe nicht adsorbiert werden sollen, weil z.B. die Adsorption dieser anderen Stoffe die Funktion des Molekularsiebes in unerwünschter Weise beeinflußen oder zur Desorption sehr hohe Ausheiztemperaturen erfordern, was dann einen hohen Energieverbrauch zur Folge hat. Beispielsweise ist es bei der Reinigung von Lösungsmitteln enthaltender industrieller Abluft mit Hilfe eines Molekularsiebes die Adsorption von ebenfalls in der Abluft enthaltendem Wasser unerwünscht; deshalb werden in entsprechenden Adsorptionsanlagen den Molekularsiebe enthaltenden Adsorptionsvorrichtungen Kondensatoren und ähnliche Einrichtungen zur Verringerung des Wassergehaltes der Abluft vorgeschaltet, wodurch jedoch der Aufwand der gesamten Anlage wesentlich erhöht wird.

Ein weiterer Nachteil der bekannten Molekularsiebe besteht darin, daß bei der Erhitzung zur Desorption der adsorbierten Substanzen eine ungleichmäßige Wärmeverteilung im Molekularsieb festzustellen ist, was nachteilige Auswirkungen auf die Desorption hat. Die Desorption kann dadurch nicht gleichmäßig stattfinden, wodurch die Desorption in ihrer Effektivität herabgesetzt wird.

Es ist daher Aufgabe der Erfindung, ein Molekularsieb der eingangs genannten Art derart weiterzuentwickeln, daß die zuvor genannten Nachteile des Standes der Technik beseitigt werden können.

Diese Aufgabe wird dadurch gelöst, daß bei einem Molekularsieb der eingangs genannten Art der oder die Körper im wesentlichen von einer Schicht einer Substanz umschlossen sind, die so ausgebildet ist, daß die Diffusionsgeschwindigkeit eines oder mehrerer bestimmter Stoffe aus einer Gruppe von adsorptionsfähigen Stoffen verlangsamt wird.

Mit Hilfe der Erfindung wird ein Molekularsieb, das normalerweise für die Aufnahme von einer bestimmten Gruppe von adsorptionsfähigen Stoffen ausgebildet ist, so modifiziert, daß tatsächlich nur noch bestimmte ausgewählte Stoffe aus dieser Gruppe von adsorptionsfähigen Stoffen adsorbiert werden. Dies wird erfindungsgemäß dadurch erreicht, daß jeder Molekularsieb-Körper von einer Schicht einer Substanz umschlossen wird, die die Diffusionsgeschwindigkeit der übrigen Stoffe aus der Gruppe der adsorptionsfähigen Stoffe verlangsamt. Dabei liegt die Schicht nur auf der Oberfläche der Molekularsieb-Körper auf, so daß um jeden Molekularsieb-Körper eine entsprechende Hülle gebildet wird.

Das auszuwählende Material für die Substanz und die Schichtdicke bestimmen sich nach denjenigen Stoffen, deren Diffusionsgeschwindigkeit verlangsamt werden soll.

Während des Durchleitens von gasförmigen und/oder flüssigen Stoffen durch das Molekularsieb benötigen die adsorptionsfähigen Stoffe eine bestimmte Verweilzeit in der die Molekularsieb-Körper

umgebenden Schicht, bevor sie in dem Molekularsieb-Körper eintreten können. In Abhängigkeit von der Art und auch Polarität des Substanzmaterials und von der Schichtdicke ist die Verweilzeit der verschiedenen Stoffe sehr unterschiedlich und führt bereits zu einer groben Aufteilung des Porenvolumens in den Molekularsieb-Körpern nach aufsteigenden Siedepunkten der zu trennenden Stoffe. Bei einigen Stoffen kann dabei die Diffusionsgeschwindigkeit durch die Substanz so stark herabgesetzt werden, daß sie bei einer gegebenen Verweilzeit innerhalb eines aus einer Vielzahl von Molekularsieb-Körpern bestehenden Molekularsieb-Bettes keine Gelegenheit haben, in erheblichem Maße in die Schicht einzudringen. Der zuvor beschriebene Effekt, der erst durch die Erfindung möglich wird, kann ebenfalls bei der Desorption nutzbringend Anwendung finden, weil dann entsprechend dem aufsteigendem Temperaturprofil die verschiedenen Stoffe direkt voneinander zu trennen sind.

Mit Hilfe der Erfindung ist es also erstmals möglich geworden, ein Molekularsieb in einfacher Weise so zu modifizieren, daß nur noch bestimmte Stoffe aus einer Gruppe von adsorptionsfähigen Stoffen tatsächlich adsorbiert werden können. Entsprechende Maßnahmen, die eine weitestgehende Abtrennung dieser Stoffe bereits vor Erreichen des Molekularsiebes ermöglichen, können somit entfallen.

Vorzugsweise kann also die Substanz so ausgebildet sein, daß die Diffusionsgeschwindigkeit von bestimmten unterschiedlichen Stoffen in unterschiedlicher Stärke verlangsamt wird. Mit Hilfe dieser Maßnahme ergibt sich in vorteilhafter Weise eine grobe Aufteilung des Porenvolumens in den Molekularsieb-Körpern nach aufsteigenden Siedepunkten der zu trennenden Stoffe.

Die Substanz kann auch so ausgebildet sein, daß sie ein Eindringen eines oder mehrerer bestimmter Stoffe in den oder die Körper im wesentlichen verhindert.

Die Substanz kann dabei im wesentlich hydrophob sein. Bei dieser Ausführung stellt die geschlossene Schicht eine Barriere für die $H_2O$-Moleküle dar. Dies ist besonders vorteilhaft, wenn Lösungsmittel enthaltende industrielle Abluft gereinigt werden soll. Durch die hydrophobe Eigenschaft sind dann bei der Desorption die hohen Ausheiztemperaturen, die bei Anwesenheit von $H_2O$ erforderlich waren, nicht mehr aufzubringen. Die Nichtanwesenheit von $H_2O$ hat den industriell hoch anzusetzenden Vorteil, daß Korrosion aufgrund von Zusetzungsmaterial in der Reaktion mit $H_2O$ ein fast vernachlässigbares Moment darstellt.

Eine gegenwärtig besonders bevorzugte Ausführung der Erfindung zeichnet sich dadurch aus, daß die Substanz aus einem Siliconöl besteht, das die Oberfläche des oder der Körper als dünner Film umschließt. Es wird somit eine im wesentlichen geschlossene Siliconfilmoberfläche als Hülle um jeden Molekularsieb-Körper geschaffen. Die Zusammensetzung des Siliconöls richtet sich hauptsächlich nach dem Arbeitstemperaturbereich. Muß mit extremen Belastungen gerechnet werden, so bietet sich an, schwer lösliche und sehr robuste Silicongummiphasen einzusetzen, die selbst hohen mechanischen Belastungen standhalten.

Die Substanz kann aus im wesentlichen unpolarem Material bestehen, wenn diejenigen Stoffe, aus denen die adsorptionsfähigen Stoffe herausgelöst werden sollen, ebenfalls im wesentlichen unpolar sind. Dann kann vorzugsweise als Siliconöl ein Methylsiliconöl mit 100% Methyl-Anteil verwendet werden.

Es ist aber auch denkbar, die Substanz als polares Material auszubilden. Dies ist dann zweckmäßig, wenn die Stoffe, aus denen die adsorptionsfähigen Stoffe durch das Molekularsieb herausgelöst werden sollen, eine entsprechende Polarität besitzen. Dann kann als Siliconöl beispielsweise ein Methylphenylsiliconöl mit 25% Phenyl-Anteil und 75% Methyl-Anteil oder ein Methylcyanosiliconöl mit 25% Cyano-Anteil und 75% Methyl-Anteil vorgesehen werden. Mit Hilfe dieser Substanzen können somit polare Stoffe getrennt werden.

Gemäß einem weiteren Aspekt der Erfindung weist das Molekularsieb eine Infrarot-Strahlen reflektierende Zusatzsubstanz auf. Dadurch lassen sich insbesondere Vorteile für die Desorption zur Entfernung der adsorbierten Stoffe unter Wärmeeinfluß erzielen. Die Zusatzsubstanz sorgt nämlich dann für eine gute Wärmeverteilung innerhalb des Molekularsieb-Körpers, insbesondere wenn heißes Inertgas in den Molekularsieb-Körper geblasen wird.

Bei einer gegenwärtig besonders bevorzugten Aufführung ist die Infrarot-Strahlen reflektierende Zusatzsubstanz in der Substanz enthalten.

Um eine besonders gute Verteilung der Zusatzsubstanz innerhalb der Substanz zu erreichen, sollte die Zusatzsubstanz als Mikrostaub ausgebildet sein. Außerdem sollte die Zusatzsubstanz aus einem keramischen Stoff bestehen.

Nachfolgend werden bevorzugte Ausführungsbeispiele der Erfindung anhand der beiliegenden Zeichnungen näher beschrieben. Es zeigen:

Figuren 1 und 2 zwei unterschiedliche Kristallstrukturen eines Molekularsieb-Körpers.

In den nachfolgend beschriebenen Ausführungsbeispielen besteht das Molekularsieb aus einer Vielzahl von Partikeln, die gemeinsam ein Molekularsieb-Bett bilden.

In der Adsorptionstechnik werden meist synthetisch hergestellte Zeolithe verwendet, die z.B. aus einer Mischung von Natriumaluminat und Wasserglas hergestellt sind. Am häufigsten wird das sogenannte Zeolith

A, dessen Kristallstruktur in Fig. 1 gezeigt ist, sowie ein Zeolith vom Typ X, dessen Kristallstruktur in Fig. 2 dargestellt ist, großtechnisch eingesetzt.

Wie die Figuren 1 und 2 erkennen lassen, ist die Kristallstruktur des Zeoliths so aufgebaut, daß zwischen den miteinander verbundenen Molekülen Hohlräume, sogenannte Mikroporen, gebildet werden. Diese Mikroporen sind über Zuführungsporen mit der Umgebung bzw. anderen Kristallen verbunden.

Ein Molekularsieb-Partikel besteht aus einer Vielzahl der in den Figuren 1 und 2 dargestellten Kristalle und enthält demnach eine entsprechend hohe Anzahl von Mikroporen. Dadurch enthalten die Molekularsieb-Partikel eine sehr große innere Adsorptionsoberfläche, die im Bereich von bis zu 1000 $m^2/g$ liegen kann.

Jedes der Molekularsieb-Partikel ist im beschriebenen Beispiel von einem Film aus Siliconöl umschlossen. Der Siliconölfilm bildet eine fast vollständige Barriere für $H_2O$-Moleküle, so daß diese - obwohl sie normalerweise vom Molekularsieb-Partikel adsorbiert werden können - nicht in das Molekularsieb-Partikel eindringen können. Dagegen ist das Siliconöl insbesondere für Lösungsmittelmoleküle in Gasform relativ durchlässig, so daß das beschriebene Molekülsieb insbesondere zur Reinigung von mit Lösungsmitteln verunreinigter, industrieller Abluft verwendet werden kann. Die Lösungsmittelmoleküle müssen dann während einer bestimmten Verweilzeit den Siliconölfilm durchlaufen, bevor sie in die Porenstruktur der Molekularsieb-Partikel eintreten. Die Verweilzeit ist je nach Filmdicke und Polarität sehr unterschiedlich und kann zu einer groben Aufteilung des Porenvolumens nach aufsteigenden Siedepunkten der zu trennenden Komponenten führen. Dieser Effekt kann bei der Desorption nutzbringend Anwendung finden, da bei aufsteigendem Temperaturprofil Lösungsmittelbestandteile, die große Siedepunktdifferenzen aufweisen, noch direkt voneinander zu trennen sind. Durch den hydrophoben Charakter des im beschriebenen Ausführungsbeispiel verwendeten Siliconöls sind dagegen während der Desorption die hohen Ausheiztemperaturen, die bei $H_2O$-Anwesenheit erforderlich wären, nicht aufzubringen.

Die Möglichkeit, über den Siliconölfilm der inneren Kristallstruktur der Molekularsieb-Partikel zu entweichen, ist bei der niedrigen Arbeitstemperatur nicht gegeben, die gewöhnlicherweise während der Adsorption herrscht.

Muß mit extremen Belastungen gerechnet werden, so können schwer lösliche und sehr robuste Silicongummiphasen eingesetzt werden, die selbst höheren mechanischen Belastungen standhalten.

Gewöhnlicherweise ist der Siliconölfilm mehrere Mikrometer dick.

Versuche haben ergeben, daß folgende Siliconöle in Abhängigkeit von der Polarität der Hauptkomponenten eines Gasstromes mit rückzugewinnenden Lösungsmittelanteilen besonders vorteilhaft sind:

1. Reines Methylsiliconöl mit 100% Methyl-Anteil:

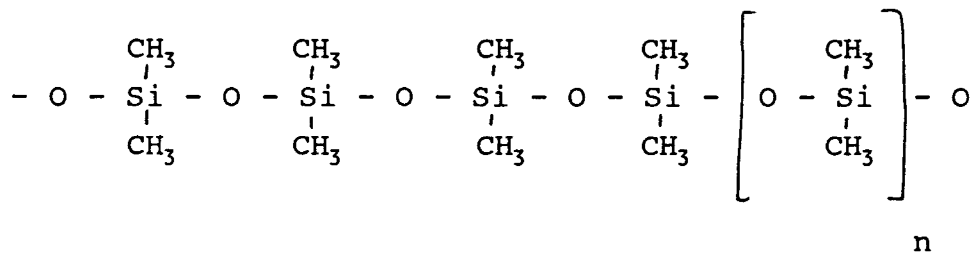

Dieses Siliconöl ist fast unpolar. Die Einsatztemperatur beträgt 0 bis 350 °C.

2. Methylphenylsiliconöl mit 25% Phenyl-Anteil und 75% Methyl-Anteil:

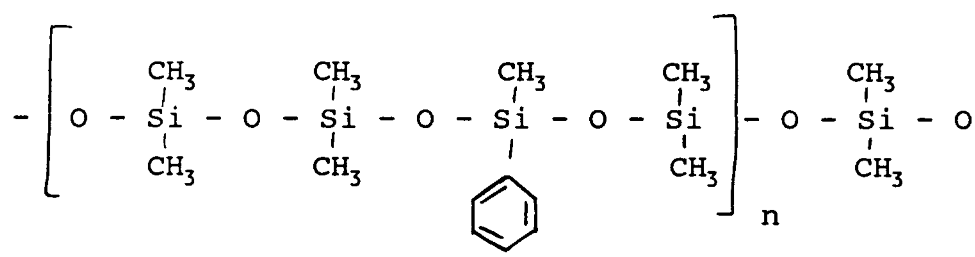

Dieses Siliconöl besitzt eine mittlere Polarität und kann zwischen 0 und 350 °C eingesetzt werden.

3. Methylcyanosiliconöl mit 25% Cyano-Anteil und 75% Methyl-Anteil:

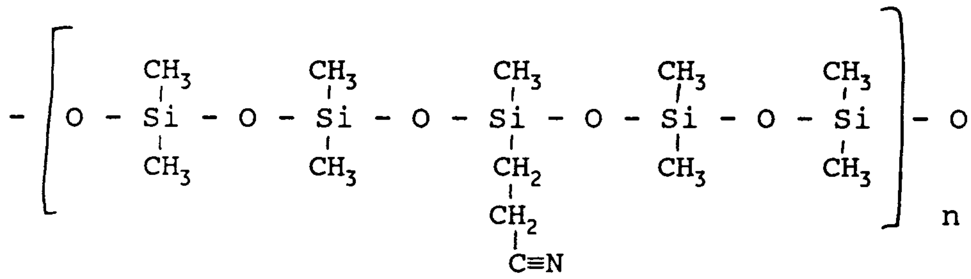

Dieses Siliconöl besitzt eine ausgeprägte Polarität. Die Einsatztemperatur liegt zwischen 0 °C und 250 °C.

Außerdem weist das Molekularsieb keramischen Mikrostaub auf. Diese zusätzliche Substanz reflektiert Infrarot-Strahlen und bewirkt somit bei der Desorption, die gegenüber der Adsorption unter erhöhter Temperatur durchgeführt wird, eine gute Wärmeverteilung innerhalb der Molekularsieb-Partikel. In dem beschriebenen Ausführungsbeispiel ist der keramische Mikrostaub im Siliconöl enthalten.

Abschließend wird darauf hingewiesen, daß anstelle von Siliconöl auch ein anderes Material verwendet werden kann, welches so ausgebildet ist, daß die Diffusionsgeschwindigkeit eines oder mehrerer bestimmter Stoffe aus einer Gruppe von adsorptionsfähigen Stoffen verlangsamt oder das Eindringen eines oder mehrerer bestimmter Stoffe in die Molekularsieb-Partikel vollständig verhindert wird. Auch können anstelle des keramischen Mikrostaubes andere Zusatzsubstanzen verwendet werden, sofern diese eine gute Wärmeverteilung innerhalb der Molekularsieb-Partikel bewirken. Solche Zusatzsubstanzen brauchen auch nicht im Siliconöl enthalten zu sein, sondern können auch direkt innerhalb der Kristallstruktur des Molekularsiebes angesiedelt sein.

## Patentansprüche

1. Molekularsieb zur Trennung von gasförmigen und/oder flüssigen Stoffen, insbesondere zur Reinigung von Lösungsmitteln enthaltender industrieller Abluft, mit einem oder mehreren gasförmige und/oder flüssige Stoffe adsorbierenden, im allgemeinen partikelförmigen Körpern, dadurch gekennzeichnet, daß der oder die Körper im wesentlichen von einer Schicht einer Substanz umschlossen sind, die so ausgebildet ist, daß die Diffusionsgeschwindigkeit eines oder mehrerer bestimmter Stoffe aus einer Gruppe von adsorptionsfähigen Stoffen verlangsamt wird.

2. Molekularsieb nach Anspruch 1,
dadurch gekennzeichnet, daß die Substanz so ausgebildet ist, daß die Diffusionsgeschwindigkeit von bestimmten unterschiedlichen Stoffen in unterschiedlicher Stärke verlangsamt wird.

3. Molekularsieb nach Anspruch 1 oder 2,
dadurch gekennzeichnet, daß die Substanz so ausgebildet ist, daß sie ein Eindringen eines oder mehrerer bestimmter Stoffe in den oder die Körper im wesentlichen verhindert.

4. Molekularsieb nach Anspruch 3,
dadurch gekennzeichnet, daß die Substanz im wesentlichen hydrophob ist.

5. Molekularsieb nach einem der Ansprüche 1 bis 4,
dadurch gekennzeichnet, daß die Substanz aus einem Siliconöl besteht, das die Oberfläche des oder der Körper als dünner Film umschließt.

6. Molekularsieb nach einem der Ansprüche 1 bis 5,
dadurch gekennzeichnet, daß die Substanz ein im wesentlichen unpolares Material ist.

7. Molekularsieb nach den Ansprüchen 5 und 6,
dadurch gekennzeichnet, daß das Siliconöl ein Methylsiliconöl mit 100% Methyl-Anteil ist.

8. Molekularsieb nach einem der Ansprüche 1 bis 5,
dadurch gekennzeichnet, daß die Substanz ein polares Material ist.

**9.** Molekularsieb nach den Ansprüchen 5 und 8,
dadurch gekennzeichnet, daß das Siliconöl ein Methylphenylsiliconöl mit 25% Phenyl-Anteil und 75% Methyl-Anteil ist.

**10.** Molekularsieb nach den Ansprüchen 5 und 8,
dadurch gekennzeichnet, daß das Siliconöl ein Methylcyanosiliconöl mit 25% Cyano-Anteil und 75% Methyl-Anteil ist.

**11.** Molekularsieb zur Trennung von gasförmigen und/oder flüssigen Stoffen, insbesondere zur Reinigung von Lösungsmitteln enthaltender industrieller Abluft, insbesondere nach einem der Ansprüche 1 bis 10, mit einem oder mehreren gasförmige und/oder flüssige Stoffe adsorbierenden, im allgemeinen partikelförmigen Körpern, dadurch gekennzeichnet, daß das Molekularsieb eine Infrarot-Strahlen reflektierende Zusatzsubstanz aufweist.

**12.** Molekularsieb nach Anspruch 11 und einem der Ansprüche 1 bis 10,
dadurch gekennzeichnet, daß die InfrarotStrahlen reflektierende Zusatzsubstanz in der Substanz enthalten ist.

**13.** Molekularsieb nach Anspruch 11 oder 12,
dadurch gekennzeichnet, daß die Zusatzsubstanz als Mikrostaub ausgebildet ist.

**14.** Molekularsieb nach einem der Ansprüche 11 bis 13,
dadurch gekennzeichnet, daß die Zusatzsubstanz aus einem keramischen Stoff besteht.

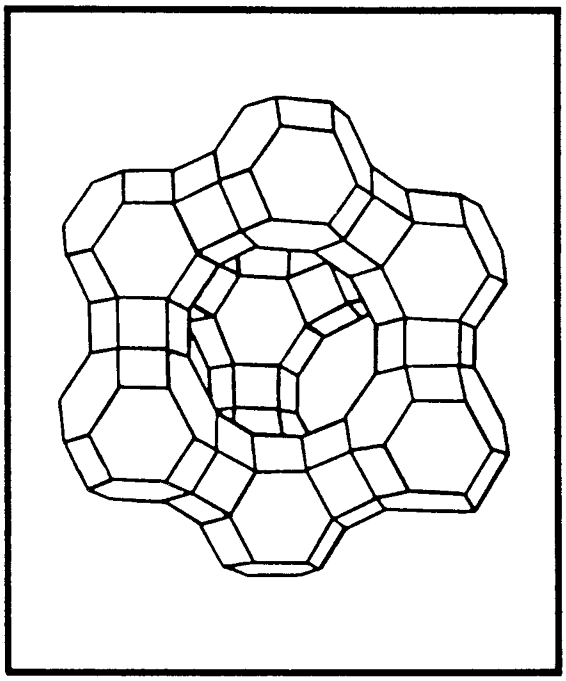

Fig. 2

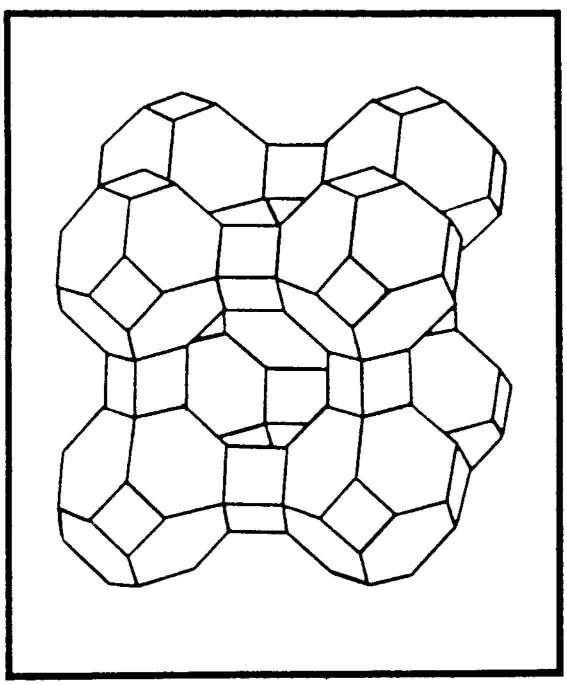

Fig. 1

Europäisches Patentamt

# EUROPÄISCHER RECHERCHENBERICHT

Nummer der Anmeldung

EP 92 10 8106

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 119 925 (CALGON CARBON CORP)<br>* Seite 4, Zeile 11 - Seite 11, Zeile 13 *<br>* Ansprüche 1-10 * | 1-3,5,6 | B01J20/18<br>B01J20/32 |
| A | US-A-3 536 521 (MCKINNEY)<br>* Spalte 1, Zeile 1 - Spalte 4, Zeile 2 * | 1-3,1-9 | |
| A | GB-A-1 148 574 (MOUNT SINAI HOSPITAL RESEARCH)<br>* Seite 1, Zeile 44 - Zeile 86 *<br>* Seite 8 - Seite 9; Ansprüche 1-32 * | 1,3 | |
| A | EP-A-0 297 543 (UNION CARBIDE)<br>* Seite 10 - Seite 11; Ansprüche 1-14 * | 1,4 | |
| A | EP-A-0 264 097 (TREMCO INC.)<br>* Spalte 3, Zeile 25 - Spalte 4, Zeile 53 *<br>* Spalte 8; Ansprüche 1-5 * | 1 | |
| A | EP-A-0 057 416 (BATTELLE-INST.)<br>ZUSAMMENFASSUNG<br>* Seite 1 * | 11,14 | RECHERCHIERTE SACHGEBIETE (Int. Cl.5 )<br>B01J |

Der vorliegende Recherchenbericht wurde für alle Patentansprüche erstellt

| Recherchenort | Abschlußdatum der Recherche | Prüfer |
|---|---|---|
| DEN HAAG | 02 SEPTEMBER 1992 | WENDLING J.P. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)